# EUROPEAN PATENT SPECIFICATION

(11) **EP 2 346 953 B1**
(45) Date of publication and mention of the grant of the patent: **09.01.2019**
(21) Application number: 09744703.1
(22) Date of filing: 06.11.2009
(51) Int. Cl.: C09D 5/18, C09D 183/06, C08L 83/06, C08L 83/08, C08K 5/5399, C08K 13/02

(54) **INTUMESCENT COMPOSITION**
INTUMESZENZMASSE
COMPOSITION INTUMESCENTE

(30) Priority: 11.11.2008 EP 08168839; 10.12.2008 US 121427 P
(43) Date of publication of application: 27.07.2011
(73) Proprietor: Akzo Nobel Coatings International B.V., 6824 BM Arnhem (NL)
(72) Inventor: WADE, Robin John, Gateshead NE10 8UE (GB)
(74) Representative: Akzo Nobel IP Department
(86) International application number: PCT/EP2009/064738
(87) International publication number: WO 2010/054984

(56) References cited:
- EP-A1- 0 568 354
- EP-A1- 0 568 354
- WO-A-2004/056913
- WO-A2-2005/078012
- US-A- 5 298 536
- US-A- 5 298 536
- US-A- 5 834 535
- US-A1- 2004 106 766
- US-B1- 7 393 879
- US-B1- 7 393 879
- DATABASE WPI Week 200332 Thomson Scientific, London, GB; AN 2003-336871 & JP 2003 055636 A (SHINETSU CHEM IND CO LTD) 26 February 2003 (2003-02-26)
- LU S Y ET AL: "Recent developments in the chemistry of halogen-free flame retardant polymers", PROGRESS IN POLYMER SCIENCE, PERGAMON PRESS, OXFORD, GB, vol. 27, no. 8, 1 October 2002 (2002-10-01), pages 1661-1712, XP025991818, ISSN: 0079-6700, DOI: 10.1016/S0079-6700(02)00018-7 [retrieved on 2002-10-01]

## Description

The present invention relates to an intumescent composition, its use to protect structures, and substrates coated with said composition.

Many materials, such as steel, rapidly lose their strength and fail in a fire. Structural collapse of "high-rise" office blocks, oil and gas facilities or other infrastructure, and process vessel or pipework rupture as a result of a fire can be catastrophic in terms of escalation of the incident, damage to property, and even loss of life.

Intumescent coatings are used on many structures to delay the effects of a fire. The coating slows the rate of temperature increase of the substrate to which the coating is applied. The coating thus increases the time before the structure fails due to the heat of fire. The extra time makes it more likely that fire fighters will be able to extinguish the fire or at least apply cooling water before the structure fails.

Intumescent coatings generally contain some form of resinous binder, for example a crosslinked high-temperature polymer such as an epoxy resin or a vinyl toluene / styrene acrylic polymer. The resinous binder forms the hard coating. If an epoxy resin is present in the binder, the binder also provides a source of carbon, which, in a fire, is converted to a char.

An adjunct material, typically phosphorous, is usually included in the coating composition to enhance the conversion of the carbonaceous elements into char (as opposed to carbon dioxide or other by-products). In addition, the coating contains additives called "spumifics" that give off gas in a fire, which causes the char to swell into a foam. Melamine, melamine pyrophosphate, and ammonium polyphosphate are commonly used spumifics.

The efficacy of these coatings is related to the formation, due to the action of heat, of a thick and porous char foam which operates as a conventional insulator. In many instances, this char foam does not have great structural strength and is easily destroyed by abrasion or erosion. In order to increase the structural strength of the char foam, fibres or glass reinforcing materials can be added to the intumescent coating composition. The use of both inorganic and organic fibres as well as of glass reinforcing materials has been disclosed. See for instance EP 0 568 354.

An object of the present invention is to provide an intumescent composition which gives a hard foam layer which may negate the use of fibres. This object is achieved by having a silicon-containing resin present in the composition, in combination with an organic resin.

In WO 2005/078012 a fire retardant composition with self-extinguishing properties for laminating applications is mentioned that comprises a polysiloxane resin and an epoxy resin as organic resin.

The present invention relates to an ambient temperature curable intumescent coating composition comprising:
A) a binder comprising
   (i) a resin comprising a polysiloxane chain or a precursor for said chain,
   (ii) an organic resin, and
   (iii) at least one type of functional group selected from the group consisting of epoxy, amine, mercaptan, carboxylic acid, acryloyl, isocyanate, alkoxysilyl, and anhydride groups, said functional groups being present as pendant and/or terminal groups on said resin comprising a polysiloxane chain or the precursor for said chain, and/or on the organic resin, provided that the binder contains alkoxysilyl groups as the only type of said functional groups, and these alkoxysilyl groups are present on the organic resin,
B) a compound capable of reacting with or catalysing the reaction between the functional groups, and
C) a spumific and a phosphorous compound char forming adjunct.

In a fire, the binder is pyrolysed, resulting in an insulating foam layer of a silicon-containing char. Without wishing to be bound to theory, it is believed that the presence of silicon in the char increases the hardness of the char and also increases the efficiency of the char by means of higher residual matter to obtain insulative properties.

Furthermore, the composition according to the invention may act as an intumescent coating, as a topcoat, and as a protective coating. Hence, when applying the composition according to the present invention, there may be no need for a separate protective layer to protect the substrate from, e.g., corrosion. And due to its protective properties and good aesthetic appearance, there also is no need for a separate topcoat to improve appearance and/or protect the intumescent layer against the effects of atmospheric weathering.

The term "polysiloxane" is defined as a polymer which includes linear, branched, ladder and/or cage structures and has a Si-O backbone with organic side groups attached to silicon atoms through a carbon or heteroatom linkage, wherein at least part of the silicon atoms is attached to one, two, or three oxygen atoms.

Although at least part of the silicon atoms is attached to one, two, or three oxygen atoms, it is possible for part, but not all, of the silicon atoms to be attached to four oxygen atoms.

Following the above definition of a polysiloxane, the resin comprising a polysiloxane chain that is present in the composition according to the present invention, is either
(i) a polysiloxane as defined above, thus having a Si-O backbone, or
(ii) a resin with an organic backbone with one or more pendant polysiloxane chains, i.e. chains having a Si-O backbone with organic side groups attached to silicon atoms through a carbon or heteroatom linkage, wherein at least part of the silicon atoms is attached to one, two, or three oxygen atoms. Said chains include linear, branched, ladder and/or cage structures
The resin comprising a polysiloxane chain preferably has a number average molecular weight Mn in the range of from 200 to about 6,000, preferably 500 - 4,000.

A precursor for a polysiloxane chain is defined as a monomeric siloxane having one or more silicon atoms, wherein at least one of the silicon atoms is attached to (i) one, two, or three, i.e. less than four, oxygen atoms and (ii) at least one organic side group through a Si-C linkage, said precursor being able to polymerise by hydrolysis and condensation reaction to form the polysiloxane chain during drying of the layer. It should be noted that where said precursor contains more than one silicon atom, some but not all silicon atoms may have four oxygen atoms attached to them.
Examples of polysiloxane precursors that do not contain a functional group selected from the list presented above, other than alkoxysilane groups, are vinyl trimethoxysilane, vinyldimethoxysilane, vinyltriethoxysilane, vinyltris(2-methoxyethoxy)silane, methyltrimethoxysilane, methyltriethoxysilane, dimethyldimethoxysilane, dimethyldiethoxysilane, trimethylethoxysilane, isooctyltrimethoxysilane, isooctyltrimethoxysilane, isooctyltriethoxysilane, hexadecyltriethoxysilane, (octadecyl)methyldimethoxysilane, phenyltriethoxysilane, (cyclohexyl)methyldimethoxysilane, and dicyclopentyldimethoxysilane.

The resin comprising a polysiloxane chain can be a polysiloxane as defined above, wherein said functional groups are present on the organic side chains. Alternatively, said resin has an organic backbone with one or more pendant polysiloxane chains.
The term "organic resin" refers to a resin of organic nature, which may contain heteroatoms, but does not contain polymeric or oligomeric silicone, siloxane, or silicate structures. The organic resin contains alkoxysilyl-functional groups.
The invention encompasses three Main Embodiments A, C, D, which are further explained below.

### Main Embodiment A

In this embodiment, the resin comprising a polysiloxane chain is a polysiloxane as defined above, the organic side groups on the polysiloxane comprise said functional group(s), and said resin has been either pre-reacted or blended with an organic resin. This composition further contains a compound capable of reacting with or catalysing the reaction between the functional groups. This compound is further referred to as "curing agent".

A preferred type of curing agent is an amine curing agent. Examples of suitable amine curing agents are aminosilane, polyamides, polymeric mannich bases, amine-functional polypropylene or polyethylene oxides, and polysiloxanes containing amine groups.

A preferred type of amine curing agent is an aminosilane, more preferably an aminoalkyl silane containing at least two alkoxy groups bonded to silicon. Examples of suitable aminoalkyl silanes are primary amines such as 3-aminopropyltriethoxysilane, 3-aminopropyltrimethoxysilane, 3-aminopropylmethyldimethoxysilane, and 3-aminopropylmethyldiethoxysilane, primary secondary amines such as N-(2-aminoethyl)-3-aminopropyltrimethoxysilane, secondary amines such as N-methyl- or N-phenyl-3-aminopropyltrimethoxysilane, polyglycolether-modified aminosilanes, and triamino-functional propyltrimethoxysilanes. Similar aminosilanes having two or three silicon atoms can also be used.

Other suitable curing agents are thiol-functional curing agents, such as pentaerithitol tetrakis(3-mercaptopropionate), thiol based curing agents linked to an organic backbone by ether linkages, thiol-functional silanes, such as mercaptopropyltrimethoxysilane, mercaptopropyltriethoxysilane, and thiol-functional silicone oils used in conjunction with a base catalyst such as DMP30 (tri-[dimethylaminomethyl] phenol).

According to this Main Embodiment, an organic resin is blended or pre-reacted with the polysiloxane or its precursor. Organic resins suitable for use in the composition of the present invention are alkoxysilyl-functional organic resins.

The organic resin and the polysiloxane may be present in the composition according to this Main Embodiment as a blend, or they may have been pre-reacted. If used as a blend, the organic resin and the polysiloxane are preferably blended in a weight ratio of 1:10 to 10:1, more preferably 1:5 to 5:1. The polysiloxane or its precursor can be pre-reacted with the organic resin in various ways, such as (i) dealcoholisation condensation, (ii) reacting a part of the functional groups present on the polysiloxane (precursor) with the appropriate reacting groups on the organic resin, or (iii) hydrosilylation. The dealcoholisation reaction can be performed by heating of a mixture of the organic resin and the polysiloxane (precursor) in the presence of a catalyst. The reaction temperature preferably ranges from 50° to 130°C, more preferably from 70° to 110°C. The reaction is preferably conducted for about 1 to about 15 hours and under substantially anhydrous conditions in order to prevent polycondensation reactions of polysiloxane (precursor). Examples of suitable catalysts are organic bases (e.g. amines), acids (acid phosphates), oxides of metals like lithium, sodium, potassium, rubidium, caesium, magnesium, calcium, barium, strontium, zinc, aluminium, titanium, cobalt, germanium, tin, lead, antimony, arsenic, cerium, boron, cadmium, and manganese, their organic acid salts, halides, or alkoxides.

### Main Embodiment C

In this embodiment, the resin comprising a polysiloxane chain has an organic backbone with one or more pendant polysiloxane chains; the functional group(s) is/are present as pendant or terminal group(s) on the organic backbone or on the polysiloxane chain(s). This composition further contains a curing agent for said functional group(s).

The resin comprising a polysiloxane chain of this embodiment is the reaction product of an organic resin and a polysiloxane or a precursor thereof.

The composition according to this embodiment also contains a curing agent. The curing agent must contain functional groups capable of reacting with at least one of the types of functional groups present on the resin comprising a polysiloxane chain. If more than one type of functional group is present on said resin, it is preferred that the curing agent is capable of reacting with at least two of these types of functional groups. The curing agent may be a polysiloxane capable of reacting with said functional groups.

A preferred type of curing agent is an amine curing agent. Examples of suitable amine curing agents are aminosilane, polyamides, polymeric mannich bases, amine-functional polypropylene oxide/polyethylene oxide, and polysiloxanes containing amine groups.

A preferred type of amine curing agent is an aminosilane, more preferably an aminoalkylsilane containing at least two alkoxy groups bonded to silicon. Examples of suitable aminoalkylsilanes are primary amines such as 3-aminopropyltriethoxysilane, 3-aminopropyltrimethoxysilane, 3-aminopropylmethyldimethoxysilane, and 3-aminopropylmethyldiethoxysilane, primary amines such as N-(2-aminoethyl)-3-aminopropyltrimethoxysilane, secondary amines such as N-methyl- or N-phenyl-3-aminopropyltrimethoxysilane, polyglycolether-modified aminosilanes, and triamino-functional propyltrimethoxysilanes. Similar aminosilanes having two or three silicon atoms can also be used.

Other suitable curing agents are thiol-functional curing agents such as pentaerithitol tetrakis(3-mercaptopropionate), thiol based curing agents linked to an organic backbone by ether linkages, thiol-functional silanes, such as mercaptopropyltrimethoxysilane, mercaptopropyltriethoxysilane, and thiol-functional silicone oils used in conjunction with a base catalyst such as DMP30 (tri-[dimethylaminomethyl] phenol).

A further organic resin is blended with the resin comprising a polysiloxane chain or its precursor.

### Main Embodiment D

According to this Main Embodiment, the functional group(s), apart from alkoxysilyl groups, is/are not present on the resin comprising a polysiloxane chain or its precursor. Instead, the binder additionally comprises an organic resin and the functional group(s) is/are present on said organic resin. This composition further contains a curing agent for said functional group(s).

In the embodiment, the resin comprising a polysiloxane chain preferably is a polysiloxane.

Examples of suitable polysiloxanes that can be used in this Main Embodiment are liquid methoxy-, ethoxy-, and silanol-functional polysiloxanes with a molecular weight above 400, such as DC 3037 and DC 3074 (both ex Dow Corning), or SY 231, SY 550, and MSE 100 (all ex Wacker).

The organic resin present in the binder of the composition according to this Main Embodiment contains at least one functional group selected from alkoxysilyl.

In addition, the composition may contain one or more additional organic resins, which may or may not contain functional groups.

The composition according to this embodiment also contains a curing agent. The curing agent must contain functional groups capable of reacting with at least one of the types of functional groups present on the organic resin. If more than one type of functional group is present on said resin, it is preferred that the curing agent is capable of reacting with at least two of these types of functional groups.

A preferred type of curing agent is an amine curing agent. Examples of suitable amine curing agents are aminosilane, polyamides, polymeric mannich bases, amine-functional polypropylene oxide/polyethylene oxide.

A preferred type of amine curing agent is an aminosilane, more preferably an aminoalkylsilane containing at least two alkoxy groups bonded to silicon. Examples of suitable aminoalkylsilanes are primary amines such as 3-aminopropyltriethoxysilane, 3-aminopropyltrimethoxysilane, 3-aminopropylmethyldimethoxysilane, and 3-aminopropylmethyldiethoxysilane, primary secondary amines such as N-(2-aminoethyl)-3-aminopropyltrimethoxysilane, secondary amines such as N-methyl- or N-phenyl-3-aminopropyltrimethoxysilane, polyglycolether-modified aminosilanes, and triamino-functional propyltrimethoxysilanes. Similar aminosilanes having two or three silicon atoms can also be used.

Other suitable curing agents are thiol-functional curing agents such as pentaerithitol tetrakis(3-mercapto propionate), thiol based curing agents linked to an organic backbone by ether linkages, thiol-functional silanes, such as mercaptopropyltrimethoxysilane, mercaptopropyltriethoxysilane, and thiol-functional silicone oils used in conjunction with a base catalyst such as DMP30 (tri-[dimethylaminomethyl] phenol).

### Features common to all embodiments

The composition according to all embodiments of the present invention contains one or more intumescent ingredients. One essential intumescent ingredient is a spumific. A spumific provides expansion gas as it decomposes in the heat of a fire. It is desirable that the spumific gives off gas at a temperature at which the resinous binder is soft but which is below the temperature at which the char is formed. In this way, the char which is formed is expanded and is a better insulator. It is possible to use spumifics such as melamine, melamine formaldehyde, methylolated melamine, hexamethoxymethylmelamine, melamine monophosphate, melamine biphosphate, melamine polyphosphate, melamine pyrophosphate, urea, dimethylurea, dicyandiamide, guanylurea phosphate, glycine, or amine phosphate. The foregoing materials release nitrogen gas when they decompose upon exposure to heat. Compounds which release carbon dioxide or water vapour upon exposure to heat can also be used. Spumifics which liberate water as they decompose upon heating are compounds such as Boric acid and boric acid derivatives. Expandable graphite can also be used as a spumific for these systems.

The spumific is preferably present in the composition according to the present invention in an amount of 1 to 20 wt%, more preferably 1 to 10 wt%, and most preferably 3 to 7 wt%, based on the total weight of the composition.

The composition according to all embodiments of the present invention further comprises a char-forming adjunct as an intumescent ingredient. However, if the spumific itself already acts as char-forming adjunct (such as ammonium polyphosphate), an additional char-forming adjunct may not be required. Therefore component C) of the invention may be a single ingredient. In this instance the invention can therefore be achieved with fewer ingredients. Preferably, the single ingredient is ammonium polyphosphate.

A char-forming adjunct promotes the formation of a char when the composition is exposed to fire. Lewis acids are believed to perform this function. Phosphorus compounds such as ammonium phosphates, phosphonatosilanes, more preferably ammonium polyphosphate, or phosphoric acid are used. It is also possible to use other char-forming adjuncts in addition to phosphorus containing compounds. Ammonium polyphosphate can be used optionally in conjunction with tris-(2-hydroxyethyl) isocyanurate (THEIC). If THEIC is used, the ratio of THEIC to ammonium phosphate preferably is between 10: 1 and 1:10 and more preferably between 3:1 and 1:3.

The char-forming adjunct is preferably present in the composition according to the present invention in an amount of 5 to 30 wt%, more preferably 10 to 25 wt%, and most preferably 1 to 20 wt%, based on the total weight of the composition.

A further intumescent ingredient that may be present in the composition according to all embodiments of the present invention is an additional source of carbon, i.e. additional to the optional organic resin. Examples of suitable additional carbon sources are pentaerythritol, dipentaerythritol, polyvinyl alcohol, starch, cellulose powder, hydrocarbon resins, chloroparaffins, and phosphated plasticisers. Fire retardants other than chloroparafins may also be employed in the formulation (such as zinc borate)

The composition according to all embodiments of the present invention preferably contains 10 to 80 wt%, more preferably 15 to 65 wt%, and most preferably 25 to 45 wt% of the binder.

The compound capable of reacting with or catalysing the reaction between the functional groups (that is: the curing agent) is preferably present in the composition in an amount of 1 to 20 wt%, more preferably 5 to 15 wt%, and most preferably 7 to 12 wt%.

The composition preferably contains 1 to 70 wt%, more preferably 1 to 60 wt%, and most preferably 5 to 50 wt% of intumescent ingredients.
All weight percentages are based on the weight of the entire composition.

The composition according to all embodiments of the invention may also contain a compound which acts as a catalyst for Si-OR condensation. In general, the composition is capable of curing under ambient temperature and humidity conditions to tack-free in 2 to 20 hours even without such a catalyst, but a catalyst may be preferred to give a faster cure.

One example of a catalyst for Si-OR condensation is an alkoxytitanium compound, for example a titanium chelate compound such as a titanium bis(acetylacetonate) dialkoxide, e.g., titanium bis(acetylacetonate) diisopropoxide, a titanium bis(acetoacetate) dialkoxide, e.g., titanium bis(ethyl-acetoacetate) diisopropoxide, or an alkanolamine titanate, e.g., titanium bis(triethanolamine) diisopropoxide, or an alkoxytitanium compound which is not a chelate such as tetra(isopropyl) titanate or tetrabutyltitanate. Such titanium compounds containing alkoxy groups bonded to the titanium may not act as catalysts alone, since the titanium alkoxide group is hydrolysable and the catalyst may become bound to the cured composition by Si-O-Ti linkages. The presence of such titanium moieties in the cured composition may be advantageous in giving even higher heat stability. The titanium compound can for example be used at 0.1 to 5% by weight of binder. Corresponding alkoxide compounds of zirconium or aluminium are also useful as catalysts.

Another example of a suitable catalyst is an organotin compound, for example a dialkyltin dicarboxylate such as dibutyltin dilaurate or dibutyltin diacetate. Such an organotin catalyst can for example be used at 0.05 to 3% by weight, based on the weight of the binder.

Other effective catalysts are organic salts, such as carboxylates, of bismuth, for example bismuth tris(neodecanoate). Organic salts and/or chelates of other metals such as zinc, aluminium, zirconium, tin, calcium, cobalt, or strontium, for example zirconium acetylacetonate, zinc acetate, zinc acetylacetonate, zinc octoate, stannous octoate, stannous oxalate, calcium acetylacetonate, calcium acetate, calcium 2-ethylhexanoate, cobalt naphthenate, calcium dodecylbenzene sulphonate, or aluminium acetate, 1,8-di-azabicyclo-[5.4.0]undec-7-ene may also be effective as catalysts.

The composition of the invention may further contain solvents and/or pigments. Examples of suitable solvents are di-methylbenzene and tri-methylbenzene.

Examples of suitable pigments are titanium dioxide (white pigment), coloured pigments such as carbon black, one or more strengthening pigments such as fibres, e.g. ceramic fibre, glass fibre, or carbon fibre, one or more anticorrosive pigments such as wollastonite or a chromate, molybdate or phosphonate, and/or a filler pigment such as barytes, talc or calcium carbonate.
The composition may also contain one or more thickening agents such as fine-particle silica, bentonite clay, hydrogenated castor oil, or polyamide wax, one or more plasticisers, pigment dispersants, stabilisers, mould releasing agents, surface modifiers, flame retardants, antibacterial agents, antimoulds, low density fillers, endothermic fillers, char promoters, fluxing aids, and levelling agents.

Although fibres may be present in the composition, their presence is not required to obtain a hard char. Therefore, it is preferred that the composition according to the present invention does not contain fibres.

It is further preferred that the composition does not comprise both a nanoclay and graphite.

The composition may also contain minute particles of amorphous silica with particle sizes of about one micron or less, preferably about 3 to 500 nm. These particles assist in reducing the density of the intumescent coating. Examples of suitable minute silica particles include flame silica, arc silica, precipitated silica and other colloidal silicas. Preferably, the minute silica particles are particles of fumed silica. More preferably, the fumed silica is a surface treated silica, for instance a silica treated with dimethyldichlorosilane or hexamethyldisilazane. Even more preferably, the amorphous silica particles are polydimethylsiloxane oil-treated fumed silica particles.

The composition according to the present invention preferably contains 0.1-10 wt%, and more preferably 0.5-5 wt% of amorphous silica particles. The silica particles preferably have a surface area of about 20-500 m²/g.

The composition generally cures at ambient temperatures, for example -5° to 40°C, and is thus suitable for application to large structures where heat-curing is impractical when the temperature is low. The composition of the invention alternatively may be cured at elevated temperatures, for example from 40° or 50°C up to 100° or 130°C, if so desired. The hydrolysis of silicon-bonded alkoxy groups depends on the presence of moisture: in almost all climates atmospheric moisture is sufficient, but a controlled amount of moisture may need to be added to the composition when curing at sub-ambient temperature or when curing in very low humidity (desert) locations. The water is preferably packaged separately from any compound containing silicon-bonded alkoxy groups.

The composition according to all embodiments of the present invention preferably has a solids content of at least 50% by weight (wt%), more preferably at least 80 wt%, and most preferably at least 85 wt%, based on the total weight of the composition. The solids content is based upon a theoretical calculation of the solvent in the formulation excluding that which would be released upon curing.
The Volatile Organic Content (VOC) of the composition as present in a paint can (that is: prior to cure) preferably does not exceed 250 g/l and most preferably is less than 100 g/l solvent per litre of the composition.

The above values refer to those of the complete composition. Hence, if the composition has the form of a 2-pack composition, they refer to the solids content and the VOC of the composition after the two packs have been mixed.

The composition according to all embodiments of the present invention can be applied on various substrates. It is particularly suitable to be applied on metal substrates, more in particular steel substrates. Due to the strength of the char, the intumescent may also protect structures from jet fires, i.e. high-temperature, high heat flux, high-velocity flames. Some compositions according to the present invention can thus also be applied in jet fire resistant zones.

The composition can be applied by conventional methods for applying intumescent compositions, such as spraying or troweling.

The invention will be elucidated with reference to the following examples. These are intended to illustrate the invention but are not to be construed as limiting in any manner the scope thereof.

### Examples

### a) Coatings tested (not according to the invention)

The following control resin systems were studied:
i) Control 1 - Bisphenol A liquid epoxy (DER331) + polyamide amine curing agent (INCA 380)
ii) Control 2 - Trimethylol propane triacrylate (Sartomer 351) + polyamide amine curing agent (INCA 830)

Details of all raw materials are given in Appendix table 1.

The Bisphenol A system is more representative of the resins used in commercial hydrocarbon intumescent coatings and as such was tested both with and without fibres.

Coatings were formulated as coating PVC 40%, 100% resin stoichiometry, ratio of Ammonium Polyphophate: Pentaerythritol: Melamine 4:1:1 by weight. The paints were 100% solids ie. no solvent introduced. Pigmentation was mixed into the resin using high speed dispersion equipment, with the pigments being split between the two packs (resin and epoxy agent) as appropriate.

A further set of coatings were also tested in which fibres were added to the coating. A blend of 3 fibres; 0.8wt% carbon fibre, 0.8wt% rockfibre, 0.8wt% magnesium silicate fibre were added.

Nominally equivalent coatings were produced based on a range of siloxane binders.
Coating A: Functional polysiloxane (HP2000) + Organic resin (Sartomer 361) + curing agent (DER331).
Coating Bi: Functional polysiloxane (HP2000) + Organic curing agent (DER331).
Coating Bii: Functional polysiloxane (HP2000) + Epoxy functional polysiloxane (Silikopon EF).
Coating C: Organic resin with pendant siloxane groups (Silikopon EF) + amine curing agent (Inca 380).
Coating D: Siloxane with alkoxy silane functionality (3074 intermediate) + functional organic resin (Eponex 1510) + coupling agent (amino silane Silquest A-1100) + catalyst (Fascat 4200).

These resins were evaluated with and without fibres and 50% fibre loading for Coating Bi and C.

The coating formulations are given in Appendix Table 2.

### b) Tests carried out

Coatings were tested in a 1.5m³ furnace operating under a hydrocarbon heating curve (in accord with BS476). The time to failure (when the back face of the coated steel panel reaches 400°C) was recorded.

Coatings were applied by airless spray on 4mm thickness on 30.48x30.48 cm 12x12 inch) steel plate. No reinforcing mesh was used. Five thermocouples were attached to the back of each steel plate and the average thermocouple reading was taken.

In the test the coated plates are mounted vertically. The furnace test therefore provides an assessment of the adhesive/cohesive characteristics of the char, When poor adhesion/cohesion is observed the expanded coating can detach from the panel. The cohesive properties are believed to be related to the strength of the char.
Additionally the strength of the char was measured in two ways; a) using a finger hardness test and b) using a commercial force gauge. In both tests the char is measured after cooling to room temperature. Both tests measure the resistance to compression of the char. In the first test hardness of the char was assessed by finger - assess hardness on a scale of 0 (poor) to 5 (good). For the second test the force gauge is a Mecmesin AFG 100 gauge which is driven into the char at 0.25mm/sec. The force as a function of depth of penetration is measured. To allow a comparison of the strength of the various chars the force required to achieve 80% compression of the char was compared.
The force gauge and finger hardness tests were also carried out on a flame retardant i.e. not a known intumescent, comprising an amine functional siloxane epoxy resin system, the details of which are found in Appendix Table 2. The flame retardant coating comprises only graphite and not both a spumific and char forming adjunct. It also contained an additional component of nanoclay dispersed in the resin.

### c) Results

The results of the furnace test are summarised in Table 1.

The siloxane coatings with and without fibres give at least equivalent fire performance (with regard to time to 400°C) to the controls and in certain cases provide a significant improvement in the time to failure.

The force gauge char hardness results are presented in Table 2. The force after 80% compression of the char is recorded.

The results show that the control coatings have very low strength even when containing the fibres. In fact, without fibres control 1 completely detached on cooling illustrating its poor adhesion/cohesion. The flame retardant coating was also very soft. The polysiloxane coatings with no fibres and 50% loading have much greater strength then the fibre containing controls and the flame retardant. It has also been shown therefore that lowering of the fibre content in the polysiloxanes still allows a hard char to be formed.

**Table 1: Furnace test data**

| | Coating | Time to 400°C |
|---|---|---|
| Controls | Control 1 (DER331 + INCA830), No fibre | 30 |
| | Control 1 Fibre | 32 |
| | Control 2 (Sartomer + INCA830), No fibre | Not tested |
| | Control 2 Fibre | 26 |
| Siloxanes | Coating A, No Fibre | 29 |
| | Coating A, Fibre | 27 |
| | Coating Bi, No Fibre | 29 |
| | Coating Bi, Half Fibre | 28.5 |
| | Coating Bi, Fibre | 25 |
| | Coating Bii, No Fibre | 43 |
| | Coating Bii, Fibre | 34 |
| | Coating C, No Fibre | 34 |
| | Coating C, Half Fibre | 39.3 |
| | Coating C, Fibre | 42.1 |
| | Coating D, No Fibre | 44 |
| | Coating D, Fibre | 33.5 |

Addition of fibres to the polysiloxane also shows far superior strength of the polysiloxane coatings compared to the control coatings and flame retardant.

It was clear during the force gauge char hardness measurements that a high compressive force is developed even under low degrees of compression, which is further evidence than the polysiloxane chars are much harder and/or stronger.

**Table 2: Force Gauge Measurements of Char Strength**

| | Coating | Force (Newton) |
|---|---|---|
| Controls | Control 1, No fibre | Char detached on cooling so not possible to measure |
| | Control 1, Fibre | 1.15 |
| | Control 2, No fibre | --- |
| | Control 2, Fibre | 3.1 |
| | Flame retardant | 0.5 |
| Siloxanes | Coating A, No Fibre | 9 |
| | Coating A, Fibre | 39 |
| | Coating Bi, No Fibre | 9 |
| | Coating Bi, Fibre | 35 |
| | Coating Bi, Half Fibre | 40 |
| | Coating Bii, No Fibre | 22 |
| | Coating Bii, Fibre | 16 |
| | Coating C, No Fibre | 12.5 |
| | Coating C, Half Fibre | 18 |
| | Coating C, Fibre | 18 |
| | Coating D, No Fibre | 15.5 |
| | Coating D, Fibre | 17 |

The "finger test" assessment of the char hardness is summarised in Table 3.

Results again show that the siloxane coatings without fibres and 50% fibre loading are stronger than the control coatings containing fibres.

The chars produced from the siloxane coatings were also more homogeneous in contrast to the control coatings' produced chars which had a fragile, layered structure

**Table 3: Char Strength assessed by "finger test" (Rate 0-5, 0 poor/5 good)**

| | Coating | Force (Newton) |
|---|---|---|
| Controls | Control 1, No fibre | Char detached on cooling so not possible to measure |
| | Control 1, Fibre | 1 |
| | Control 2, No fibre | Not measured |
| | Control 2, Fibre | 1 |
| | Flame retardant | 1.5 |
| Polysiloxane | Coating A, No Fibre | 2 |
| | Coating A, Fibre | 4 |
| | Coating Bi, No Fibre | 5 |
| | Coating Bi, Fibre | 4 |
| | Coating Bii, No Fibre | 3.5 |
| | Coating Bii, Fibre | 4 |
| | Coating C, No Fibre | 5 |
| | Coating C, Half Fibre | 4.5 |
| | Coating C, Fibre | 3 |
| | Coating D, No Fibre | 2.5 |
| | Coating D, Fibre | 3 |

The experiments clearly demonstrate that the polysiloxane coatings provide good fire protection and can in the absence of fibres produce chars with better adhesive and cohesive strength than known fibre containing intumescent coatings. Coatings with a lower loading of fibre that can maintain a good char strength are also beneficial both with regard to coating aesthetics and spray characteristics (maintaining effective mixing ratios of the applied paint), two properties which are adversely affected by high fibre loadings.

### Appendix Table 1 - Raw Materials

| | |
|---|---|
| DER331 | ex Dow Chemicals. Liquid epoxy resin, based on Bisphenol A, epoxy equivalent weight 182-198. |
| Inca 830 | Polyamido amine curing agent with equivalent weight 93 ex Akzo Nobel, |
| Sartomer 351 | Trimethylol propane triacrylate ex Sartomer Company, equivalent weight 99. |
| Ammonium Polyphosphate | Exolit AP422 ex Clariant. |
| Pentaerythritol | Charmor PM40 ex Perstorp. |
| Melamine | Melafire ex DSM (a micronised melamine grade). |
| Carbon Fibre | Sigrafil C25 S003 ex SG2 Carbon Group. |
| Rockfibre | Rockfibre MS615 Roscoul 1000 ex Lapinous Fibres a silicate based fibre. |
| Magnesium silicate fibre | Isofrax 1200C ex Unifrax. |
| HP2000 | Wacker Chemicals. Described as an amino functional methyl, phenyl siloxane resin with amine number 2.6-2.9. |
| Siliokopon EF | Ex Tego Coating Additives and Speciality resins. A silicone-epoxy resin with an epoxy equivalent weight of ∼450g/mole. |
| 3074 Intermediate | Ex Dow Corning a methoxy functional siloxane resin. |
| Eponex 1510 | Ex Hexion Speciality Chemicals a hydrogenated Bisphenol A epoxy resin. |
| Silquest A-1100 | Ex Momentive Performance Chemicals. Amino silane coupling agent. |
| Wacker silicone fluid 65000VP | Amino functional silicone (MW=10000 based on PDMS, functionality 2.6) |
| Nanofil 32 | Nanoclay ex Sud Chemie |
| Vantico MY-0510 | Epoxy resin (epoxy equivalent weight 101) |
| Grafguard 220-80B | Expandable graphite ex Graftech |

### Appendix Table 2 -

### Controls

| | Composition wt% | | | |
|---|---|---|---|---|
| | Control 1 | Control 1, Fibre | Control 2, Fibre | Fire Retardant |
| D.E.R 331 | 32.32 | 32.14 | | |
| Exolit AP 422 | 34.4 | 32.98 | 33.84 | |
| Sartomer 351 | | | 24.15 | |
| MY 0510 | | | | 8.05 |
| | | | | |
| Inca 830 | 16.08 | 15.98 | 22.68 | |
| Melafine | 8.6 | 8.25 | 8.48 | |
| Charmour PM40 | 8.6 | 8.25 | 8.48 | |
| Rockfibres | | 0.8 | 0.8 | |
| Isofrax 1260 | | 0.8 | 0.8 | |
| Sigrafil C25 | | 0.8 | 0.8 | |
| Silicone fluid 65000VP | | | | 65.38 |
| Nanofil 32 | | | | 6.54 |
| Grafguard 220-80B | | | | 20.03 |

| | | | | |
|---|---|---|---|---|
| Note Control 2 no fibre formulation not included as not tested. | | | | |

### Coating A

| | Composition wt% | |
|---|---|---|
| | A No fibre | A Fibre |
| D.E.R 331 | 20.74 | 20.63 |
| Sartomer 351 | 1.09 | 1.08 |
| Exolit AP 422 | 32.36 | 30.95 |
| | | |
| Silres HP2000 | 29.63 | 29.46 |
| Melafine | 8.09 | 7.74 |
| Charmour PM40 | 8.09 | 7.74 |
| Rockfibres | | 0.8 |
| Isofrax 1260 | | 0.8 |
| Sigrafil C25 | | 0.8 |

### Coating B

| | Composition wt% | | | | |
|---|---|---|---|---|---|
| | Bi no fibre | Bi half fibre | Bi fibre | Bii no fibre | Bii fibre |
| D.E.R 331 | 22.38 | 22.25 | 22.25 | | |
| Exolit AP 422 | 32.36 | 31.75 | 30.95 | 33.33 | 31.91 |
| Silikopon EF | | | | 32.47 | 32.30 |
| | | | | | |
| Silres HP2000 | 29.08 | 28.92 | 28.92 | 17.54 | 17.43 |
| Melafine | 8.09 | 7.94 | 7.74 | 8.33 | 7.98 |
| Charmour PM40 | 8.09 | 7.94 | 7.74 | 8.33 | 7.98 |
| Rockfibres | | 0.4 | 0.8 | | 0.8 |
| Isofrax 1260 | | 0.4 | 0.8 | | 0.8 |
| Sigrafil C25 | | 0.4 | 0.8 | | 0.8 |

### Coating C

| | Composition wt% | | |
|---|---|---|---|
| | C no fibre | C half fibre | C fibre |
| Silikopon EF | 38.57 | 38.77 | 38.32 |
| Exolit AP 422 | 33.48 | 32.50 | 32.13 |
| Charmour PM40 | 8.37 | 8.10 | 8.01 |
| Melafine | 4.18 | 4.04 | 4.00 |
| Rockfibres | | 0.4 | 0.78 |
| Isofrax 1260 | | 0.4 | 0.78 |
| Sigrafil C25 | | 0.4 | 0.78 |
| | | | |
| Inca 830 | 11.22 | 11.35 | 11.20 |
| Melafine | 4.18 | 4.04 | 4.00 |

### Coating D

| | Composition wt% | |
|---|---|---|
| | D no fibre | D fibre |
| Eponex 1510 | 18.49 | 18.43 |
| Dow Corning 3074 Intermediate | 20.13 | 19.99 |
| Exolit AP422 | 34.30 | 32.84 |
| Charmour PM40 | 8.57 | 8.21 |
| Rockfibres | | 0.8 |
| Isofrax 1260 | | 0.8 |
| Sigrafil C25 | | 0.8 |
| | | |
| Silquest A-1100 | 9.45 | 9.42 |
| Fascat 4200 | 0.49 | 0.5 |
| Melafine | 8.57 | 8.21 |

## Claims

1. Ambient temperature curable intumescent coating composition comprising:
A) a binder comprising
(i) a resin comprising a polysiloxane chain or a precursor for said chain,
(ii) an organic resin, and
(iii) at least one type of functional group selected from the group consisting of epoxy, amine, mercaptan, carboxylic acid, acryloyl, isocyanate, alkoxysilyl, and anhydride groups, said functional groups being present as pendant and/or terminal groups on said resin comprising a polysiloxane chain or the precursor for said chain, and/or on the organic resin, provided that the binder contains alkoxysilyl groups as the only type of said functional groups, and these alkoxysilyl groups are present on the organic resin,
B) a compound capable of reacting with or catalysing the reaction between the functional groups, and
C) a spumific and a phosporous compound char forming adjunct.

2. Intumescent composition according to claim 1 wherein the resin comprising a polysiloxane chain is a polysiloxane with organic side groups containing said functional group(s).

3. Intumescent composition according to claim 1 wherein the resin comprising a polysiloxane chain is a polysiloxane with organic side groups containing said functional group(s), and wherein the resin comprising a polysiloxane chain has been pre-reacted or blended with the organic resin.

4. Intumescent composition according to claim 1 wherein the resin comprising a polysiloxane chain has an organic backbone with one or more pendant polysiloxane chains and the functional group(s) is/are present as pendant or terminal group(s) on the organic backbone or the polysiloxane chain(s).

5. Intumescent composition according to any preceding claim wherein the spumific is also the char forming adjunct.

6. Intumescent composition according to claim 5 wherein the spumific is ammonium polyphosphate.

7. Use of a composition according to any one of the preceding claims to protect structures from fire.

8. Substrate comprising a layer formed by applying a composition according to any one of claims 1-6 on the substrate's surface, followed by curing said composition to form a layer.

## Patentansprüche

1. Bei Umgebungstemperatur härtbare, intumeszierende Beschichtungszusammensetzung umfassend:
A) ein Bindemittel umfassend
(i) ein Harz umfassend eine Polysiloxankette oder eine Vorstufe für diese Kette,
(ii) ein organisches Harz, und
(iii) wenigstens eine Art von funktioneller Gruppe, ausgewählt aus der Gruppe bestehend aus Epoxy, Amin, Mercaptan, Carbonsäure, Acryloyl, Isocyanat, Alkoxysilyl und Anhydridgruppen, wobei die funktionellen Gruppen als anhängende und/oder Endgruppen an dem Harz umfassend eine Polysiloxankette oder die Vorstufe für dieser Kette, und/oder an dem organischen Harz vorhanden sind, vorausgesetzt, dass das Bindemittel Alkoxysilylgruppen als einzige Art der funktionellen Gruppen enthält und diese Alkoxysilylgruppen an dem organischen Harz vorhanden sind,
B) eine Verbindung, die mit den funktionellen Gruppen reagieren oder die Reaktion zwischen den funktionellen Gruppen katalysieren kann, und
C) einen Schaumbildner und eine Phosphorverbindung als kohlebildende Zusatz.

2. Intumeszierende Zusammensetzung nach Anspruch 1, wobei das Harz umfassend eine Polysiloxankette ein Polysiloxan mit organischen Seitengruppen ist das die funktionelle(n) Gruppe(n) enthält.

3. Intumeszierende Zusammensetzung nach Anspruch 1, wobei das Harz umfassend eine Polysiloxankette ein Polysiloxan mit organischen Seitengruppen ist das die funktionelle(n) Gruppe(n) enthält, und wobei das Harz umfassend eine Polysiloxankette mit dem organischen Harz vorreagiert hat oder mit ihm gemischt wurde.

4. Intumeszierende Zusammensetzung nach Anspruch 1, wobei das Harz umfassend eine Polysiloxankette ein organisches Backbone mit einem oder mehreren anhängenden Polysiloxanketten hat, und die funktionelle(n) Gruppe(n) als anhängende Gruppe(n) oder Endgruppe(n) an dem organischen Backbone oder der (den) Polysiloxankette(n) vorhanden ist (sind).

5. Intumeszierende Zusammensetzung nach einem der vorhergehenden Ansprüche, wobei der Schaumbildner auch der kohlebildende Zusatz ist.

6. Intumeszierende Zusammensetzung nach Anspruch 5, wobei der Schaumbildner Ammoniumpolyphosphat ist.

7. Verwendung einer Zusammensetzung nach einem der vorhergehenden Ansprüche um Konstruktionen vor Feuer zu schützen.

8. Substrat umfassend eine Schicht gebildet durch Auftragen einer Zusammensetzung nach einem der Ansprüche 1-6, auf die Oberfläche eines Substrats, gefolgt von dem Aushärten der Zusammensetzung, um eine Schicht zu bilden.

## Revendications

1. Composition de revêtement intumescente durcissable à température ambiante comprenant :
A. un liant comprenant
(i) une résine comprenant une chaîne de polysiloxane ou un précurseur pour ladite chaîne,
(ii) une résine organique, et
(iii) au moins un type de groupe fonctionnel choisi dans le groupe constitué par les groupes époxy, amine, mercaptan, acide carboxylique, acryloyle, isocyanate, alcoxysilyle et anhydride, lesdits groupes fonctionnels étant présents sous forme de groupes pendants et/ou terminaux sur ladite résine comprenant une chaîne de polysiloxane ou le précurseur pour ladite chaîne et/ou sur la résine organique, à condition que le liant contienne des groupes alcoxysilyle comme seul type desdits groupes fonctionnels, et ces groupes alcoxysilyle soient présents sur la résine organique,
B. un composé capable de réagir avec ou de catalyser la réaction entre les groupes fonctionnels, et
C. un agent spumescent et un adjuvant de formation de produit de carbonisation à base de composé de phosphore.

2. Composition intumescente selon la revendication 1, dans laquelle la résine comprenant une chaîne de polysiloxane est un polysiloxane ayant des groupes latéraux organiques contenant ledit/lesdits groupe(s) fonctionnel(s).

3. Composition intumescente selon la revendication 1, dans laquelle la résine comprenant une chaîne de polysiloxane est un polysiloxane ayant des groupes latéraux organiques contenant ledit/lesdits groupe(s) fonctionnel(s), et dans laquelle la résine comprenant une chaîne de polysiloxane a été préalablement amenée à réagir ou mélangée avec la résine organique.

4. Composition intumescente selon la revendication 1, dans laquelle la résine comprenant une chaîne de polysiloxane a un squelette organique avec une ou plusieurs chaîne(s) de polysiloxane pendante(s) et le(s) groupe(s) fonctionnel(s) est/sont présent(s) sous forme d'un/de groupe(s) pendant(s) ou terminal/terminaux sur le squelette organique ou la/les chaîne(s) de polysiloxane.

5. Composition intumescente selon l'une des revendications précédentes, dans laquelle l'agent spumescent est également l'adjuvant de formation de produit de carbonisation.

6. Composition intumescente selon la revendication 5, dans laquelle l'agent spumescent est le polyphosphate d'ammonium.

7. Utilisation d'une composition selon l'une quelconque des revendications précédentes pour protéger des structures contre le feu.

8. Substrat comprenant une couche formée par application d'une composition selon l'une quelconque des revendications 1 à 6 sur la surface du substrat, suivie du durcissement de ladite composition pour former une couche.
